# EUROPEAN PATENT APPLICATION

(11) **EP 2 355 432 A1**
(43) Date of publication of application: **10.08.2011**
(21) Application number: 10152797.6
(22) Date of filing: 05.02.2010
(51) Int. Cl.: H04L 27/26, H04L 25/03, H04L 25/08, H04J 14/00

(54) **Method and arrangement for transmitting an orthogonal frequency diversity multiplex signal via at least one optical filter**

(71) Applicant: Nokia Siemens Networks Oy, 02610 Espoo (FI)
(72) Inventor: Jansen, Sander, 81827, Munich (DE); Van Den Borne, Dirk, 81379, München (DE)

(57) **Abstract**

The invention describes method and an arrangement for transmitting an orthogonal frequency diversity multiplex signal via an optical filter.
OFDM channels (CG1,CGq) located near an edge of an OFDM spectrum are copied and shifted to an opposite edge of the OFDM spectrum (CCq,CC1) and transmitted via the optical filter.
At the receiver symbols are derived from original (CG1,CGq) and the copied OFDM channels (CCq,CC1). Then the symbols having a better signal quality are elected for further processing.

## Description

### FIELD OF THE INVENTION

The invention refers to a method and an arrangement for transmitting an orthogonal frequency diversity multiplex signal via at least one filter.

### BACKGROUND OF THE INVENTION

Orthogonal frequency diversity multiplex (OFDM) is a promising modulation technique well known from wireless and wired communication systems. A large number of closely-spaced orthogonal subcarriers carry the data information.

Since a few years OFDM has been proposed for fiber-optic communication systems and has found many potential applications varying from the access to long-haul networks. OFDM offers many advantages that make it interesting for the use of fiber-optic applications such as negligible linear crosstalk, scalability to higher order modulation formats, etc. Because of the small and well defined spectrum of the OFDM signal, it has a high tolerance with respect to narrowband optical filtering. However, one of the main disadvantages of OFDM is that an optical bandwidth filter must be centered precisely around the complete OFDM signal as the tolerance with respect to filter offset is very low.

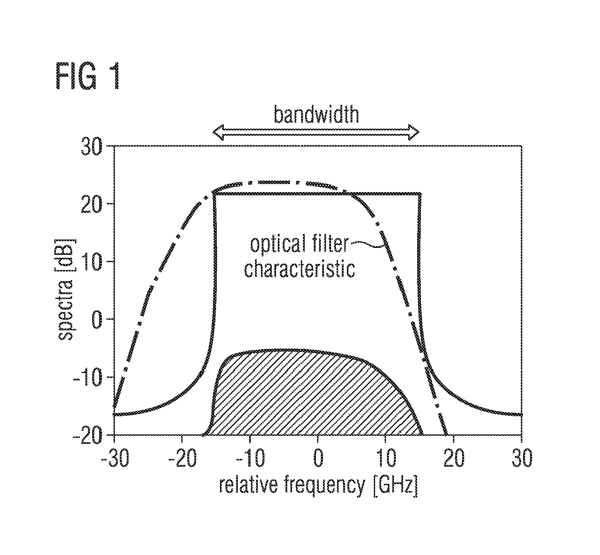

The problem of a frequency offset of optical filters is illustrated in Fig. 1 showing the original OFDM spectrum (black) and the attenuated spectrum (white). In this figure it can be seen that an offset of an optical filter directly leads to attenuation of the subcarriers located near the edge of the OFDM spectrum. As a result, the signal noise ratio (SNR) of these subcarriers is deteriorated and the overall bit error rate (BER) is steeply increased.

Today, optical OFDM has not been commercialized. However in the experimental investigations reported with optical OFDM so far, the center wavelength of the OFDM signal is tuned precisely to the filter shape of optical filters that are used in the transmission line. For proof-of-principle experiments this is a valid method, however, in commercial systems this would imply that expensive lasers are required with precise locking over their lifetime. In addition, the OFDM systems require stringent specifications with respect to their bandwidth and alignment to the ITU (International Telecommunication Union) grid.

### PRIOR ART

To improve the signal quality different kinds of diversity are suggested for OFDM communication systems. The US Patent Application 2006/0193268 A1 mentions in the "Abstract" the different possibilities of diversity transmission.

In the German Patent Application 2314630 Erich Burger discloses a method for an optimized evaluation of two received diversity signals. According to the signal quality the signals are added with equal or different amplitudes, or the better signal is selected.

### OBJECTS AND SUMMARY OF THE INVENTION

It is an object of the present invention to provide a method and an arrangement to cope with the instability of optical bandwidth filters and to mitigate filtering penalties.

The inventive idea to mitigate the influence of a spectral drift of an optical filter is
- copying optical channels of an OFDM signal located near an edge of an OFDM spectrum to obtain copied optical channels having shifted carrier frequencies adjacent to an opposite edge of an OFDM spectrum,
- transmitting an optical OFDM signal comprising in addition these copied optical channels carrying duplicated symbols,
- receiving and demodulating an OFDM transmission signal,
- evaluating the quality of regained symbols of the copied optical channels and regained symbols of the allocated original optical channels, and
- selecting those symbols having a better signal quality or combining allocated original an copied symbols to obtain optimized symbols.

For a not predicable filter drift is advantageous
- copying optical channels near both edges of the OFDM spectrum to gain copied optical channels having shifted carrier frequencies adjacent to opposite edges of the OFDM spectrum.

Copying of the optical channels is preferable executed by modulating the symbols onto shifted baseband carriers with frequencies adjacent to an opposite edge of a OFDM baseband spectrum.

At the receiver the symbols with better signal quality are selected by
- evaluating training symbols of the copied subcarrier signals and of the allocated original subcarrier signals to determine the signal quality.

The realisation of the features above is done by corresponding means used in the shown embodiments.

### BRIEF DESCRIPTION OF THE DRAWINGS

Presently preferred examples of the invention are described below with reference to accompanying drawings, where
FIG 1 the characteristic of an optical bandwidth filter for OFDM signals,
FIG 2 shows an embodiment of an OFDM transmission system according to the invention,
FIG 3 and FIG 4 show diagrams illustrating the copying of subcarrier information, and
FIG 5 and FIG 6 show the extended OFDM spectra in relation with the optical bandwidth filter.

### DETAILED DESCRIPTION OF THE INVENTION

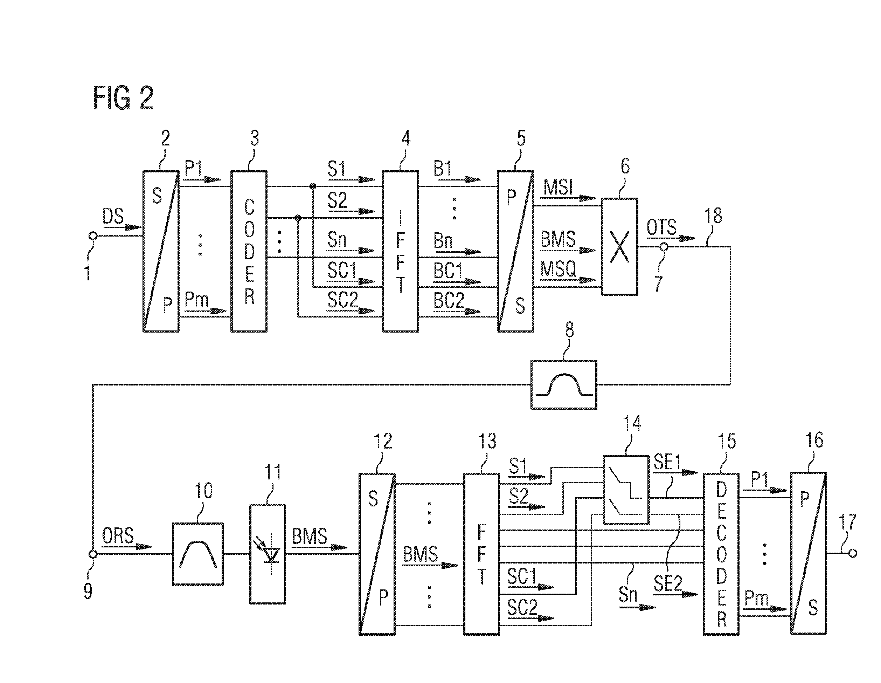

**FIG 2** illustrates a simplified block diagram of an OFDM transmission system. Only the functional units relating to the invention are shown. The system may be adapted for polarisation multiplex signals as well as for different kinds of coding and modulation.

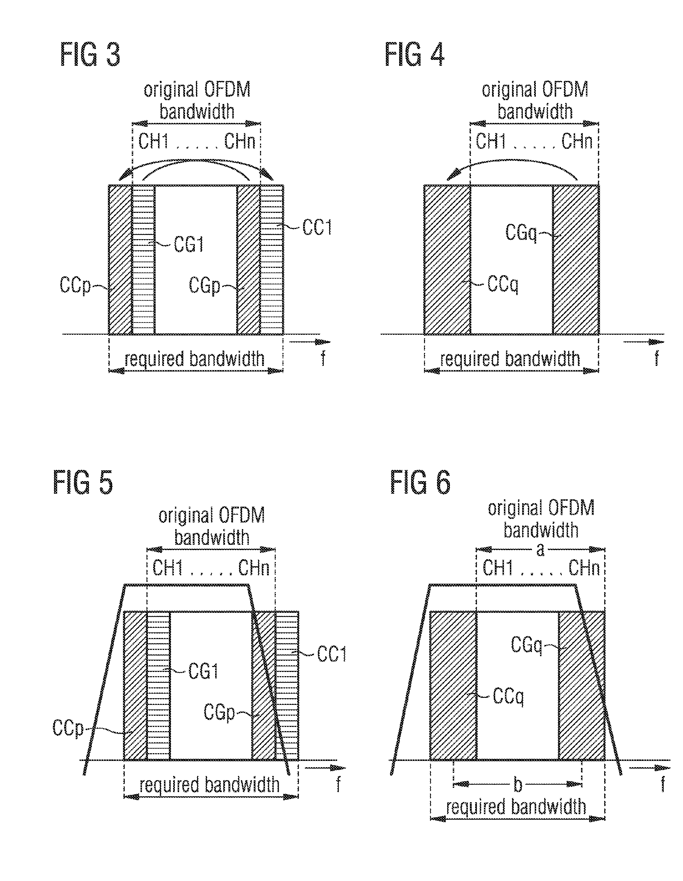

First, the general operation of an OFDM system, even though known to those skilled in the art, may by explained shortly. A data signal DS is received at the transmitter input 1 and converted in a serial-parallel-converter 2 into a sequence of parallel data words, each comprising P1 - Pm bits.
Each data word P1 - Pm is converted (coded) into a group of symbols S1 -Sn (e.g. QAM quaternary amplitude modulation may be used). Orthogonal baseband subcarriers are then modulated by n sequences of these symbols. Today, this feature is carried out by a digital IFFT (Inverse Fast Fourier Transformation) processing unit 4. The obtained subcarrier signals B1 - Bn are then converted (added) in a parallel-serial-converter 5 into an OFDM baseband signal BMS, which in the shown embodiment comprises a real component MSI and an imaginary component MSQ, both modulating an optical carrier in a modulation unit 6. The n subcarrier signals B1 - Bn, also denoted as baseband channels, are converted into n optical signals referred to as optical channels CH1 - CHn (FIG 3, FIG4). The generated optical OFDM signal OTS is transmitted via an optical fiber 18 to a receiver. An optical filter 7, this expression includes any band limiting element, is inserted between transmitter and receiver and/or a second filter 10 may be inserted at the transmitter/receiver.

A band limited OFDM transmission signal ORS is received at input 9 of a receiver 11. The transmission signal is coherent demodulated (converted into an electrical signal) and sampled. The regained OFDM baseband signal BMS is split into a plurality of equal parallel signals by a second serial-parallel-converter 12 and a FFT (Fast Fourier Transformation) is applied to these signals in the FFT-unit 13, which outputs n sequences of symbols S1 - Sn (the same reference signs are used for the signals in the OFDM transmitter and the OFDM receiver for reasons of clarity). Of course, the regained symbols S1 - Sn may be impaired by different effects while being transmitted. The parallel symbols S1 - Sn are estimated in a decoder (symbol estimation unit) 15 and converted into parallel data words P1 - Pm, then multiplexed by the second parallel-serial-converter 16 into the data signal DS and output at the receiver output 17.

As stated above, the OFDM transmission signal OTS may be impaired. The invention refers to impairments by the optical filter 7 or other bandwidth limiting effects. According to **FIG 3**, optical channels CG1 and CGp (CG1, CGp - representing a group of e.g. 1 - ca. 10 channels) located near the edges of the optical OFDM spectrum are "copied" to optical channels CC1, CCp adjacent to opposite edges of the optical OFDM spectrum. In other words, the copied channels are diversity channels, which shifted carrier frequencies are adjacent to the original OFDM bandwidth.

If the filter pass-band varies to lower frequencies - solid line in **FIG 5** - the original channels with higher frequencies CHp and the channels CC1 "copied" to higher frequencies are impaired. But the original channels CG1 and the copied channels CCp at the other filter edge are not impaired. These "channels" are selected instead of the impaired channels CHp, CC1; or more exact, the symbols transmitted via these undisturbed optical channels are selected by the OFDM receiver. If the filter pass-band drifts in the other direction the copied channels CHp, CC1 are selected instead of the channels CCp, CH1.

Usually certain filters drift in the same direction. If the filter drift is known, it is sufficient to copy optical channels CHq from the insecure filter edge to channels CCq located at the opposite edge of the OFDM spectrum as shown in **FIG 4****.** If the optical channels (subcarriers) are shifted (or the filter pass-band is shifted from "a" to "b") pass-band drifts in both directions are also correctable.

**FIG 6** shows that the optical channels CHq are seriously impaired by the filter drift while the copied channels CCq are undisturbed.

The "copying" of the optical channels is preferable done in the OFDM baseband while generating subcarrier signals B1 - Bn.

A preferable embodiment for "copying" the optical channels is shown in **FIG 2**. The symbols S1, S2 (allocated to subcarrier signals B1 and B2) are duplicated and the duplicated symbols SC1 - SC2 are modulated onto lower (or higher) subcarriers generating the copied subcarrier signals BC1 and BC2. The "copied" subcarrier signals BC1 and BC2 are converted into "copied" optical signals referred to as "copied channels". Regarding FIG 4 and FIG 6 the "original subcarrier signals" B1 and B2 correspond to the original CHq channel group and the "copied subcarrier signals" BC1, BC2 correspond to the copied channels CCq.

In a transmission system according to the invention, the bandwidth of each optical filter 7, 10 remains the same, the bandwidth of the transmission signal has the same amount, but the required bandwidth range is enhanced according to the possible filter drift.

At the OFDM receiver the copied symbols SC1, SC2 are derived from copied subcarrier signals (BC2, BC2). The signal quality of the recovered original symbols S1 S2 and allocated copied symbols SC1, SC2 carrying the same information is evaluated by an evaluation unit 14. The symbols with the better signal quality are selected, and these elected symbols SE1, SE2 are fed to the decoder 15. The amplitudes of the symbols or the subcarrier signals respectively are in most cases sufficient as quality criterions. More sophisticated criteria e.g. OSNR (optical signal noise ratio), error rate if FEC (forward error correction) is applied, or a quality factor may be used. Selected is in a first embodiment of the estimation unit 14 the subcarrier signal (baseband channel) with the better signal quality, but symbol by symbol selection may be also applied.

In another embodiment, the values of the allocated symbol S1, SC1 and S2, SC2 may be averaged. This is advantageous when original and copied channels are impaired. In a more advanced embodiment, optimized selected symbol values SE1, SE2 may be calculated considering quality (dependent) factors Q1, Q2, e.g. according to SE = (Q1·S1 + Q2·SC1)/(Q1+Q2) (S1, SC2 - symbols with equal amplitudes, Q1, Q2 = 0 - 1). The best function may be achieved by experiment. The selected or calculated symbols our output by the estimation unit 14 and converted into data bits. It is also advantageous to use time multiplexed trainings symbols to determine the signal quality of the symbol sequences (baseband channels).

The invention may be used prophylactical even if impairments by a filter are not expected in the near future. The present invention is not limited to the details of the above described principles. The scope of the invention is defined by the appended claims and all changes and modifications as fall within the equivalents of the scope of the claims are therefore to be embraced by the invention.

### REFERENCE SIGNS

- 1: transmitter input
- 2: serial-parallel-converter
- 3: coder
- 4: IFFT unit
- 5: parallel-serial-converter
- 6: modulation unit
- 7: transmitter output
- 8: first optical filter
- 9: receiver input
- 10: optional optical filter
- 11: optical receiver (demodulation/sample unit)
- 12: second serial-parallel-converter
- 13: FFT unit
- 14: evaluation unit
- 15: decoder
- 16: second parallel-serial-converter
- 17: receiver output
- 18: optical fiber

- DS: data signal
- P1 - Pm: data word(s)
- S1-Sn: parallel symbols
- SE1, SE2: selected symbols
- B1 - Bn,: subcarrier signals (baseband channels)
- BC1, BC2: copied subcarrier signals
- BMS: OFDM baseband signal
- OTS: optical OFDM (transmission) signal
- ORS: band-limited OFDM (transmission) signal
- CH1: 1st channel group
- CHp: pth channel group
- CHq: qth channel group
- CC1: copied first channel group

- CCp: copied pth channel group
- CCq: copied qth channel group

## Claims

1. A method for transmitting an orthogonal frequency diversity multiplex (OFDM) signal (OTS) via an optical filter (7)
comprising the steps of
- copying OFDM channels (CGq) located near an edge of an OFDM spectrum to obtain copied OFDM channels (CCq) having shifted carrier frequencies adjacent to an opposite edge of the OFDM spectrum,
- transmitting an optical OFDM signal (OTS) comprising in addition these copied optial channels (CCq),
- receiving and demodulating a bandwidth-limited OFDM transmission signal (ORS),
- evaluating the quality of regained symbols (SC1, SC2) of the copied optical channels (CCq) and regained symbols (S1, S2) of the allocated original optical channels (CGq), and
- selecting those symbols (S1, SC1; S2, SC2) having a better signal quality, or combining allocated original and copied symbols (S1, SC1; S2, SC2) to obtain optimized symbols.

2. The method according to claim 1,
comprising the step of
- copying optical channels (CG1, CGp) located near both edges of the optical spectrum to gain copied optical channels (CC1, CCp) having shifted carrier frequencies adjacent to opposite edges of the OFDM spectrum.

3. The method according to claim 1 or 2,
comprising the step of
- generating said copied optical channels (CC1, CCp, CCq) by modulating the symbols (S1, S2) onto shifted baseband carriers with frequencies adjacent to an opposite edge of a OFDM baseband spectrum.

4. The method according to claim 1 or 2,
**comprising the step of**
- evaluating at the receiver training symbols of the copied subcarrier signals (BC1, BC2) and of the allocated original subcarrier signals (B1, B2) to determine the signal quality.

5. The method according to claim 5,
**comprising the step of**
- calculating optimized symbols (SE) according to SE = (Q1.S1 + Q2-SC1)/(Q1+Q2);
with S1, SC2 -symbols with equal amplitudes; quality factors Q1, Q2 = 0 - 1; SE - optimized symbol.

6. An arrangement for transmitting an orthogonal frequency diversity multiplex (OFDM) signal (OTS) comprising a plurality of channels (CH1 - CHn) via an optical filter (7, 8)
**comprising**
- means for copying optical channels (CGq) located near an edge of an OFDM spectrum to obtain copied optical channels (CCq) having shifted carrier frequencies adjacent to an opposite edge of the OFDM spectrum,
- means for transmitting an optical OFDM signal (OTS) comprising in addition these copied optical channels (CCq),
- means for receiving and demodulating a bandwidth-limited OFDM transmission signal (ORS),
- means for evaluating the quality of regained symbols (SC1, SC2) of the copied optical channels (CCq) and of regained symbols (S1, S2) of the allocated original channels (CGq) and
- means for selecting the symbols (S1, SC1; S2, SC2) having a better quality or combining the allocated original and copied symbols (S1, SC1; S2, SC2).

7. The arrangement according to claim 6,
**comprising**
- means for copying channels (CG1, CGp) located near both edges of the OFDM spectrum to gain copied channels (CC1, CCp) with shifted carriers adjacent to opposite edges of the OFDM spectrum.

8. The arrangement according to claim 6,
**comprising**
- means for generating said copied channels (CC1, CCp, CCq) by modulating sequences of the symbols (S1, S2) on subcarriers having shifted baseband carrier frequencies adjacent to an opposite edge of an OFDM baseband spectrum.

9. The arrangement according to claim 6, 7 or 8,
**comprising**
- at the receiver means for evaluating training symbols of the copied subcarrier signals (BC1, BC2) and of the allocated original subcarrier signals (B1, B2) to determine the signal quality.

10. The arrangement according to claim 9,
**comprising**
- an estimation unit (14) calculating optimized symbols (SE) according to SE = (Q1^{.}S1 + Q2-SC1)/(Q1+Q2);
with S1, SC2 - symbols with equal amplitudes; quality factors Q1, Q2 = 0 - 1; SE - optimized symbol.
